# EUROPÄISCHE PATENTSCHRIFT

(11) **EP 0 516 648 B1**
(45) Veröffentlichungstag und Bekanntmachung des Hinweises auf die Patenterteilung: **26.01.1994**
(21) Anmeldenummer: 91903417.3
(22) Anmeldetag: 16.02.1991
(51) Int. Cl.: A61J 3/00, A23G 3/26, B01J 2/00

(54) **VORRICHTUNG ZUR DURCHFÜHRUNG EINES DRAGIER- UND/ODER FILMÜBERZUGSVERFAHRENS**
DEVICE FOR FILM-COATING AND/OR FOR SUGAR-COATING TABLETS
DISPOSITIF D'ENDUCTION AVEC UNE PELLICULE OU AVEC DU SUCRE

(30) Priorität: 20.02.1990 DE 4005208
(43) Veröffentlichungstag der Anmeldung: 09.12.1992
(73) Patentinhaber: GEBRÜDER LÖDIGE MASCHINENBAU GMBH, D-33050 Paderborn (DE)
(72) Erfinder: LÜCKE, Roland, D-4790 Paderborn (DE)
(74) Vertreter: KOHLER SCHMID + PARTNER
(86) Internationale Anmeldenummer: DE9100128
(87) Internationale Veröffentlichungsnummer: WO9112790

(56) Entgegenhaltungen:
- EP-A- 131 152
- DE-A- 56 573
- DE-A- 3 502 426
- US-A- 3 834 347

## Beschreibung

Vorrichtung mit einer um eine Achse rotierenden Trommel für Überzugsgut, insbesondere für die Filmlackierung und/oder Zuckerdragierung, deren Innenraum einem Fluidstrom aussetzbar ist, wobei dem Innenraum ein Element zur Führung eines Gasstromes zugeordnet ist, das den Gasstrom als gerichtete mantelförmige Strömung durch die Ebene der Trommelöffnung und zumindest mit einer Längskomponente in Richtung der Achse durch den Innenraum der Trommel leitet und wobei das Element aus aus zwei ineinander angeordneten und zwischen sich einen ringförmigen Spalt begrenzenden zylindrischen Rohrabschnitten ausgebildet ist.

Eine derartige Vorrichtung ist durch die EP-A-01 31 152 bekanntgeworden.

Bei der bekannten Vorrichtung rotiert die Trommel um eine Achse und in der Trommel ist das zu überziehende Gut einem Fluidstrom ausgesetzt. Der Fluidstrom wird über eine Verteilerkrone am antriebseitigen Ende der Trommel in den Innenraum der Trommel geleitet. In die Trommel ragen hohlkörperförmige Arme, die Öffnungen aufweisen, über die der Fluidstrom aus dem Trommelinnenraum abgezogen werden kann.

Weiterhin ist eine Vorrichtung für die Filmlackierung oder Zuckerdragierung durch den Prospekt Hi-Coater WD 11.1982 SM/HICO-d 32.2000 mit der Bezeichnung "Hi-Coater, das moderne und wirtschaftliche System für Tablettencoating" bekanntgeworden.

Derartige Geräte werden in der pharmazeutischen Industrie bevorzugt zum Überziehen von Kernen eingesetzt. Die Überzüge sollten möglichst gleichmäßig und glatt sein und die Umwälz- und Rollierbewegungen, die eine mehr oder weniger starke Vermischung der Kerne untereinander hervorrufen, sollten so sein, daß der Abrieb, d. h. die Scherbeanspruchung der Kerne, gering gehalten wird.

Die Trocknung der besprühten Kerne sollte möglichst schonend erfolgen und die verfahrensspezifischen Vorgaben berücksichtigen. Die Trocknungsgeschwindigkeit muß dem jeweiligen Prozeß bestmöglich angepaßt sein, damit beispielsweise Risse in der Beschichtung des Kerns vermieden werden.

Bei der Vorrichtung nach dem Prospekt Hi-Coater WD 11.1982 SM/HICO-d 32.2000 wird der Trommel das Gas im Bereich der Beschickungsöffnung zugeführt. Die Luft wird dem Gutbett nicht durch besondere konstruktive Vorkehrungen zugeleitet, sondern trifft unmittelbar auf die der Lufteintrittsöffnung gegenüberliegende Fläche der Beschickungsöffnung. Von dort aus strömt die eintretende Luft den perforierten Blechen im Bodenbereich der Trommel zu. Schon im Eintrittsbereich wird die einströmende Luft verwirbelt und negative Beeinflussungen eines vorgegebenen Sprühstrahls sind nicht auszuschließen. Ferner wird die einströmende Luft bevorzugt auf dem kürzesten Weg den perforierten Blechen zuströmen. Dies führt über die Trommellänge gesehen zu unterschiedlichen Wärme- und Stoffaustauschvorgängen. Meist ist der Trocknungsprozeß bei hintereinander bzw. mehreren gleichzeitig ablaufenden Verfahrensschritten der zeitbestimmende Schritt im ganzen Verfahrensablauf, so daß hier in einem besonderen Maße eine Optimierung zweckdienlich ist. Hinzu kommt noch, daß der Trocknungsprozeß auch ein qualitätsbestimmender Verfahrensschritt ist, so daß auch unter diesem Gesichtspunkt eine möglichst gleichmäßige Trocknung der behandelten Kerne anzustreben ist.

Betrachtet man die Sprühvorrichtung der bekannten Vorrichtung aus WD 11.1982 SM/HICO-d 32.2000, so ist festzustellen, daß die Sprühstrahlanstellwinkel zum sich umwälzenden Gutbett jeweils vor dem Beginn eines Dragier- oder Filmüberzugsprozesses eingestellt werden müssen. Da sich die Form und die Lage der kaskadisch fließenden Überböschung aufgrund von meist unterschiedlichen Drehzahlen der Trommel von Verfahrensbeginn bis zu einem stationären Zustand ändert, müßte man bei einer Optimierung der Kernbehandlung den Sprühstrahleinstellwinkel zum Gutbett auch während des Prozesses ändern.

Der Erfindung liegt daher die Aufgabe zugrunde, eine Vorrichtung der eingangs genannten Art dahingehend weiterzubilden, daß die bei den verschiedenen Überzugsverfahren zum Einsatz kommenden Fluide optimiert einsetzbar sind und damit besser genutzt werden können.

Diese Aufgabe wird erfindungsgemäß dadurch gelöst, daß die Trommel partiell perforiert ist, daß das Element in oder unmittelbar an der Trommelöffnung angeordnet ist, und daß die Achsen der zylindrischen Rohrabschnitte zueinander versetzt sind.

Die erfindungsgemäße Vorrichtung hat damit den wesentlichen Vorteil, daß Verwirbelungen des Gases schon am Systemeintritt vermieden werden. Der Gasstrom strömt gerichtet in den Innenraum der Trommel und wird erst danach zu den perforierten Blechen im Bodenbereich der Trommel hin umgeleitet. Ist die Strömung des Gases in Richtung der Rotationsachse der Trommel ausgerichtet, so ist eine Umlenkung des Gasstromes nicht mehr notwendig. Über die gesamte Länge in Achsrichtung der Trommel gesehen strömt das Gas den perforierten Blechen im Bodenbereich der Trommel zu. Der Gasstrom wird gleichmäßig durch das gesamte Gutbett hindurch den perforierten Blechen zugeführt und damit bestmöglich ausgenutzt.

Der Gasstrom umhüllt als sogenannter Gasmantel die Sprühvorrichtung, wenn das Element als Rohrabschnitt ausgebildet ist und der Rohrabschnitt in oder unmittelbar an der Trommelöffnung angeordnet ist. Mit einer derartigen konstruktiven Ausgestaltung läßt sich der einströmende Gasstrom wirksam ausrichten, so daß unabhängig vom Gasdurchsatz von der Trommelöffnung bis zur Innenseite der Rückwand der Trommel konstante Strömungsverhältnisse erzielbar sind.

Erfindungsgemäß ist das Element ein zylindrischer Rohrabschnitt, das zur Führung und Ausrichtung des Gasstromes besonders einfach und kostengünstig herzustellen ist. Der zylindrische Rohrabschnitt bildet mit der zylindrischen Innenfläche der Beschickungsöffnung oder der zylinderförmigen Trommelöffnung einen Ringspalt, durch den das einströmende Gas gerichtet in die Trommel einströmt.

Das Element begrenzt einen ringförmigen Spalt, wobei die Achsen der Zylinderflächen des äußeren und des inneren Umfangs des Elements und die Achse der Zylinderfläche der Trommelöffnung zueinander versetzt sind. Dadurch lassen sich über den Umfang der Trommelöffnung unterschiedliche Spaltweiten einstellen. Der Ringspalt kann durch die exzentrische Anordnung des Elements gegenüber der Trommelöffnung derart ausgebildet sein, daß im unteren Bereich der Trommelöffnung nur sehr wenig Gas in den Innenraum der Trommel strömt und der Hauptanteil des einströmenden Gases dem System aufgrund einer großen Spaltweite im oberen Bereich der Trommelöffnung gerichtet zuströmt. Das Element kann auch so ausgebildet sein, daß im unteren Bereich der Trommelöffnung kein Gas in die Trommel einströmt und sich nur ein gerichteter Gasstrom mantelartig über die Sprühvorrichtung legt. Der Gasmantel ist dann nach unten geöffnet. Eine derartige Gasströmung beeinflußt den Sprühstrahl der Sprühvorrichtung auch dann nicht negativ, wenn die Sprühvorrichtung weit von der Gutbettoberfläche beabstandet ist.

Das Element kann auch als Zylinder oder Hohlzylinder ausgebildet sein, dessen Grund- und Deckflächen von einer unregelmäßigen geschlossenen Kurve gebildet werden. Damit lassen sich unterschiedlichste Spaltweiten ausbilden.

In weiterer Ausgestaltung der Erfindung ist das Element mit Gaszuführungskanälen verbindbar, die radial von außen in den ringförmigen Spalt des Elements münden.

Dies hat den Vorteil, daß sich das der Vorrichtung zugeführte Gas mit einfachen Mitteln gleichmäßig über der Mantelfläche des Elements verteilen läßt. Werden die Gaszuführungskanäle unter einem Winkel von kleiner 90° dem Spalt zugeführt, so erfolgt zusätzlich eine Ausrichtung der Gasströmung. Bevorzugte Strömungsrichtungen können gezielt vorgegeben werden.

In weiterer Ausbildung der Erfindung strömt der Fluidstrom in einer während des Behandlungsprozesses verstellbaren Sprühvorrichtung.

Dies hat den Vorteil, daß bei Dragier- und Filmüberzugsvorgängen der Sprühstrahlanstellwinkel zum Gutbett jeweils ohne Unterbrechung des Prozesses der Lage des Gutbettes in Abhängigkeit von der Drehzahl der Trommel anpaßbar ist. Eine bessere Ausnutzung der zu versprühenden Suspensionen, Dispersionen, hochviskosen Medien usw. ist möglich, weil die Nutz- und Arbeitszone des Sprühstrahles immer exakt auf das Gutbett ausgerichtet ist. Auch bei hohen Flüssigkeitsdurchsätzen, die Düsen arbeiten taktweise, werden die zu versprühenden Medien bestmöglichst genutzt, weil der Sprühstrahl immer auf das Gutbett gerichtet ist und Fehlversprühungen im Randbereich eines Gutbetts nicht stattfinden.

In weiterer Ausgestaltung der Erfindung weist die Sprühvorrichtung einen Sprühdüsenträger auf, der drehbar gelagert ist. In Verbindung mit einer feinen Rasterung des Drehmechanismuses kann der Sprühdüsenträger verstellt werden. Auch elektrische und/oder pneumatische Antriebe sind zur Verstellung des Sprühdüsenträgers einsetzbar, insbesondere dann, wenn die Vorrichtung programmgesteuert betrieben wird und die Verfahrensparameter dokumentiert werden.

In einer weiteren vorteilhaften Ausgestaltung der Erfindung ist der Abstand der Sprühvorrichtung zur freien Oberfläche eines überzugsgutes in der Trommel verstellbar.

Dies hat den Vorteil, daß beispielsweise auch Suspensionen mit hohen Verdampfungsgeschwindigkeiten, d.h. geringen Verdampfungsenergien, auf ein Gutbett versprüht werden können. Dazu wird die freie Weglänge des Sprühstrahles zur Gutbettoberfläche verkürzt. Die Kerne können dann gleichzeitig einer Gasbehandlung ausgesetzt werden.

In weiterer Ausgestaltung der Erfindung ist die Sprühvorrichtung in Achsrichtung der Trommel verschiebbar. Dies ermöglicht sowohl eine zentrale Versprühung eines Mediums in der Trommel sowie eine über die Länge der Trommel gerichtete Versprühung mittels mehrerer Düsen. Die Sprühvorrichtung kann unterschiedlich weit in die Trommel eingeführt werden.

Ist der Sprühdüsenträger als im Querschnitt kreisförmiges Rohr an einem Ende auf einem ersten Tragarmabschnitt drehbar befestigt und ist ein anderer zweiter Tragarmabschnitt an einem Gehäuseteil verschiebbar und/oder verschwenkbar befestigt, so lassen sich die unterschiedlichen Bewegungen des Sprühdüsenträgers und der Sprühvorrichtung einfach konstruktiv umsetzen. Verstellungen des Sprühdüsenträgers gegenüber dem ersten Tragarmabschnitt sind damit definiert und können als Verfahrensparameter festgehalten, aufgezeigt, protokolliert oder in Datenspeichern abgelegt werden.

In einer weiteren Ausbildung der Erfindung ist das Element zur Führung des Gasstromes nach der Lage eines Gutbetts ausrichtbar.

Die hat den Vorteil, daß der Sprühstrahl der Düsen und die gerichtete Gasströmung einander angepasst gegenüber der Lage des Gutbetts verstellt werden können. Sprühstrahl und Gasstrom können sich gegenseitig nicht negativ beeinflussen.

Die erfindungsgemäße Vorrichtung entspricht damit allen erweiterten Anforderungen, die bei der Herstellung pharmazeutischer überzüge gestellt werden. Die erfindungsgemäße Vorrichtung erlaubt eine einfache Optimierung von Dragier- und Filmüberzugsprozessen. Neben einer zuverlässigen Abdichtung der gasführenden Kanäle ist der Gasstrom gerichtet. Er strömt bevorzugt mittig in die Trommel und breitet sich dort mantelförmig über der Achse aus. Einströmende Flüssigkeitsmengen werden gut ausgenutzt, indem sie unter idealen Bedingungen dem Gutbett zugeführt werden. Der Wirkungsgrad von Versprühung und Trocknung ist hoch, so daß neben getakteten auch kontinuierliche überzugsverfahren störungsfrei durchgeführt werden können. Die Qualität überzogener Kerne wird verbessert, indem Fehler beim Auftragen der Schicht und bei der Trocknung sowie bei der Prozeßsteuerung vermindert werden. Risse im Film oder Bläschenbildung durch zu schnelles Sprühen oder Trocknen werden verhindert.

Weitere Vorteile ergeben sich aus der Beschreibung und der beigefügten Zeichnung. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:
- Fig. 1: eine erfindungsgemäße Vorrichtung zum Filmlackieren und/oder Zuckerdragieren mit einer aus der Vorrichtung ausgefahrenen Sprühvorrichtung;
- Fig. 2: eine erfindungsgemäße Vorrichtung zum Filmlackieren und/oder Zuckerdragieren, mit einer zu einem Gehäuseteil beabstandeten Stirnwand und herausverfahrener und verschwenkter Sprühvorrichtung;
- Fig. 3: einen Teilausschnitt einer Stirnwand und der um eine Achse rotierenden Trommel in Seitenansicht;
- Fig. 3a: einen sichelförmig ausgebildeten Spalt zur gerichteten Gasführung;
- Fig. 4: einen schematischen Aufbau einer erfindungsgemäßen Vorrichtung zum Filmlackieren und/oder Zuckerdragieren; und
- Fig. 5: einen schematischen Aufbau der Gasführung in einer Stirnwand mit einem exzentrisch ausgebildeten Ringspalt.

Die einzelnen Figuren der Zeichnung zeigen den erfindungsgemäßen Gegenstandteilweise stark schematisiert und sind nicht maßstäblich zu verstehen. Die Gegenstände der einzelnen Figuren sind teilweise stark verkleinert bzw. vergrößert dargestellt, damit ihr Aufbau besser gezeigt werden kann.

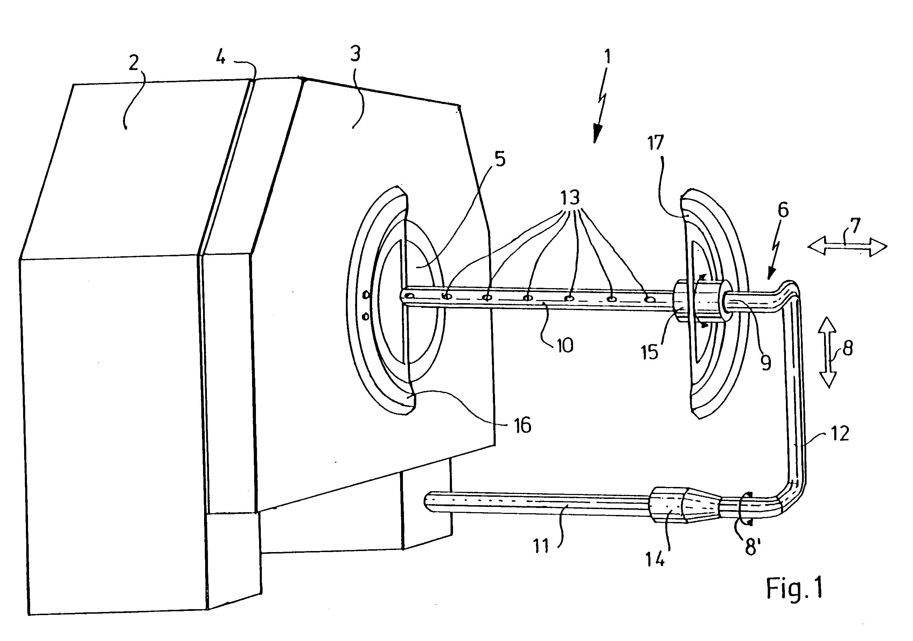

In Fig. 1 ist mit 1 eine Vorrichtung zum Filmlackieren und Zuckerdragieren gezeigt, deren Gehäuse sich aus einem Gehäuseteil 2 und einer Stirnwand 3 zusammensetzt. In dem Gehäuseteil 2 sind unter anderem eine drehbar gehaltene Trommel und die dazu notwendigen Antriebe untergebracht. Die Stirnwand 3 ist zu dem Gehäuseteil 2 verfahrbar und ist in Anlage an dem Gehäuseteil 2 über ein umlaufendes Dichtungselement 4 gegenüber dem Gehäuseteil 2 abgedichtet. In der Stirnwand 3 ist eine Beschikkungsöffnung 5 vorgesehen, die unmittelbar in die Trommelöffnung der rotierenden Trommel mündet. Zwischen der Beschickungsöffnung 5 und der Trommelflanschstirnwand ist ein Dichtungselement vorgesehen, das die rotierende Trommel gegenüber der ortsfesten Beschickungsöffnung 5 abdichtet. Über die Beschickungsöffnung 5 kann eine Sprühvorrichtung 6 in den Innenraum der Trommel verfahren werden. Die Sprühvorrichtung 6 ist in Pfeilrichtungen 7 verfahrbar, in Pfeilrichtungen 8 absenk- bzw. anhebbar, und in Pfeilrichtung 8' verschwenkbar.

Die Sprühvorrichtung 6 weist einen ersten Tragarmabschnitt 9 auf, der einen Sprühdüsenträger 10 drehbar gelagert hält und einen zweiten Tragarmabschnitt 11, der als verfahrbare und verschwenkbare Führungsschiene ausgebildet ist. Über den zweiten Tragarmabschnitt 11 ist die Sprühvorrichtung 6 im Gehäuseteil 2 gehalten. Zwischen dem ersten Tragarmabschnitt 9 und dem zweiten Tragarmabschnitt 11 ist ein mittlerer Tragarmabschnitt 12 ausgebildet, der Leitungen zum Sprühdüsenträger 10 führt. An dem Sprühdüsenträger 10 sind mit 13 Düsen bekannter Art angedeutet. Die Düsen 13 sind mit Leitungen verbunden, die im ersten Tragarmabschnitt 9 und in dem mittleren Tragarmabschnitt 12 geführt sind und in Anschlüsse eines Verteilers 14 münden. An den Verteiler 14 können flüssigkeits- und/oder gasführende Leitungen angeschlossen werden, über die den Düsen 13 die zu versprühenden Flüssigkeiten und/oder Gase zugeführt werden. Werden beispielsweise Zweistoffdüsen als Düsen 13 verwendet, kann das Gas im ersten, zweiten und mittleren Tragarmabschnitt 9, 11, 12 geführt sein und die flüssigkeitsführenden Leitungen sind an den Sprühdüsenträger 10 von außen ankoppelbar. Der Sprühdüsenträger 10 ist über einen Griff 15 in einem Winkelbereich von ca. 30° verdrehbar. An der Stirnwand 3 ist eine erste Klappe 16 vorgesehen, über die gemeinsam mit einer zweiten Klappe 17 die Beschickungsöffnung 5 verschließbar ist. Die zweite Klappe 17 ist im Ausführungsbeispiel der Fig. 1 an der Sprühvorrichtung 6 befestigt.

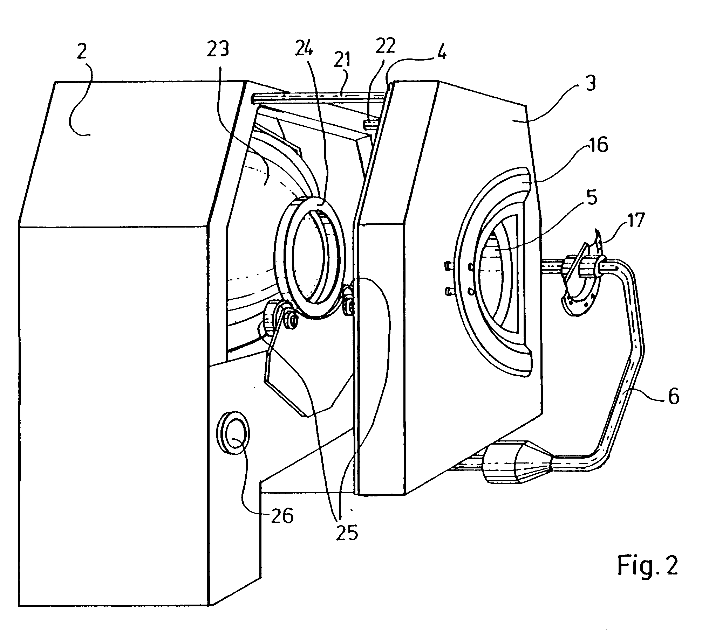

Fig. 2 zeigt eine Vorrichtung zum Filmlackieren und Zuckerdragieren gemäß Fig. 1, bei der die Stirnwand 3 vom Gehäuseteil 2 beabstandet gezeigt ist. Die Stirnwand 3 wird von Führungselementen 21, 22 gehalten. Die Führungselemente 21, 22 sind mit der Stirnwand 3 fest verbunden. Im Gehäuseteil 2 sind die Führungselemente 21, 22 verfahrbar gelagert. Über das Dichtungselement 4 ist die Stirnwand 3 gegenüber dem Gehäuseteil 2 abdichtbar. In dem Gehäuseteil 2 ist eine Trommel 23 drehbar gelagert. Die Trommelöffnung ist als Trommelflansch 24 ausgebildet, der mit seiner äußeren Umfangsfläche auf Laufrollen 25 aufliegt.

Die Trommel 23 ist an der Rückseite so ausgebildet, daß sie über einen Antrieb antreibbar ist. Die Drehzahl der rotierenden Trommel 23 ist stufenlos änderbar; auch die Laufrichtung der Trommel 23 kann gewählt werden. In bekannter Weise ist an der Trommel 23 eine in der Figur nicht gezeigte Produktauslaßöffnung vorgesehen, über die das umhüllte Gut aus der Trommel 23 in bereitzustellende Behälter nach unten entleert werden kann.

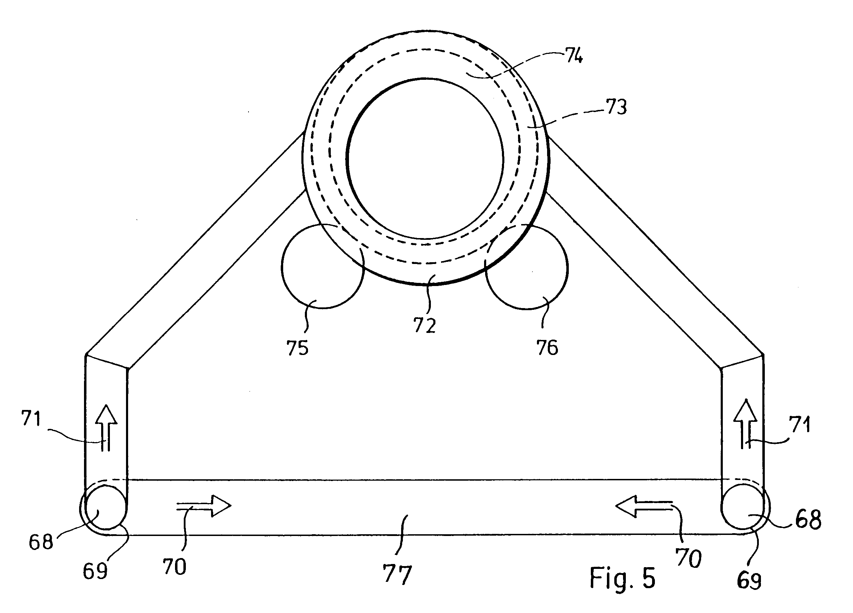

In dem Gehäuseteil 2 ist seitlich ein Gasführungskanal 26 geführt, der an Gasführungskanäle der Stirnwand 3 gasdicht ankoppelbar ist. Über die Gasführungskanäle wird das Gas in den Innenraum der Trommel 23 geführt (siehe Fig. 5).

In der Fig. 2 ist die Sprühvorrichtung 6 in einer Weise an der Vorrichtung verfahren und verschwenkt, daß die Stirnwand 3 über die Führungselemente 21, 22 von dem Gehäuseteil 2 weg verfahren werden kann. Ein freier Raum entsteht zwischen der Stirnwandinnenseite und der Gehäuseteilvorderfront. An der Frontseite der Stirnwand 3 sind die ersten und zweiten Klappen 16 und 17 teilweise geöffnet bzw. verschwenkt. Die zweite Klappe 17 wird mit der Sprühvorrichtung 6 verschwenkt, d.h. wird die Sprühvorrichtung 6 aus dem Trommelinnenraum herausgefahren, so wird auch die zweite Klappe 17 von der Beschickungsöffnung 5 weg verfahren.

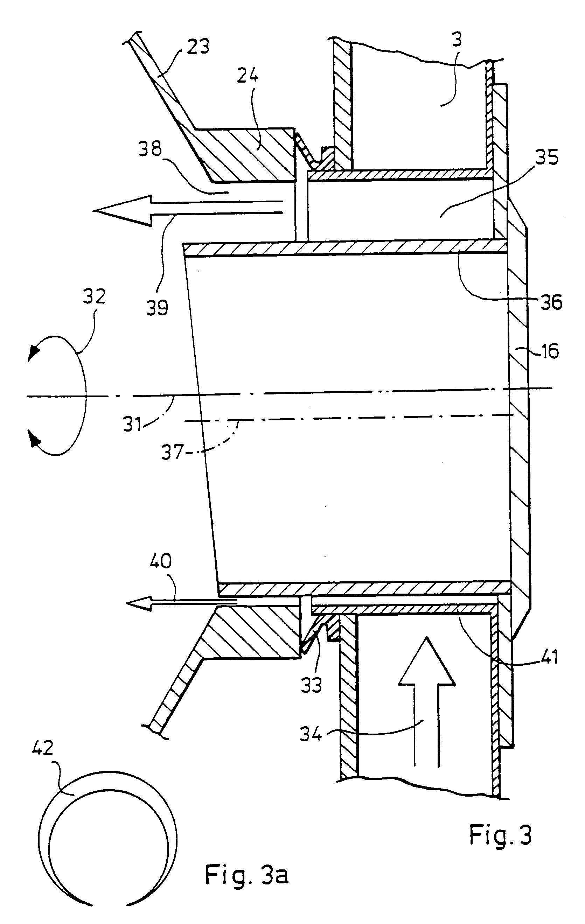

Fig. 3 zeigt in Seitenansicht einen Ausschnitt mit Teilen der Stirnwand 3 und der Trommel 23. Die Trommel 23 rotiert um eine Achse 31, und mit Pfeil 32 ist in der Figur gezeigt, daß die Rotationsrichtung der Trommel 23 frei wählbar ist. An die Stirnfläche des Trommelflansches 24 drückt sich ein Dichtring 33 der Stirnwand 3. Mit dem Dichtring 33 wird ein Spalt zwischen der Trommel 23 und der Stirnwand 3 gasdicht verschlossen. Im Betrieb rotiert die Stirnfläche der Trommel 23 und der Dichtring 33 ist ortsfest angeordnet. Gas wird aus dem Gehäuseteil der Vorrichtung kommend der Stirnwand 3 zugeführt. Das Gas strömt in Pfeilrichtung 34 in einen Ringspalt 35 der Stirnwand 3. Zur ersten Klappe 16 hin ist der Ringspalt 35 gasdicht verschlossen. Das in den Ringspalt 35 einströmende Gas wird über den Umfang des Ringspaltes 35 gleichmäßig verteilt und kann über eine zum Trommelflansch 24 hinweisende Offnung in das Innere der Trommel 23 strömen. Die Vorrichtung wird so betrieben, daß im Innern der Trommel 23 gegenüber dem Atmosphärendruck immer ein geringerer Druck herrscht. Der Unterdruck in der Trommel 23 wird aufgebaut, indem stetig mehr Gas aus der Trommel abgezogen als dieser zugeführt wird. Der Ringspalt 35 wird nach innen von der Mantelfläche eines Rohrabschnitts 36 begrenzt, dessen Achse 37 zur Achse 31 der Trommel 23 versetzt ist. In der Seitenansicht der Fig. 3 wird deutlich, daß dadurch im oberen Bereich der Trommelöffnung 38 ein größerer Spalt ausgebildet ist als im unteren Bereich der Trommelöffnung 38. Strömt nun Gas in den Ringspalt 35, so strömt es in pfeilrichtung 39 und Pfeilrichtung 40 in den Innenraum der Trommel 23. Das Gas wird sich aufgrund der unterschiedlichen Spaltweiten bevorzugt im oberen Bereich der Trommel 23 ausbreiten. Durch den Rohrabschnitt 36 wird der Gasstrom in Richtung Innenraum der Trommel 23 ausgerichtet und er umhüllt die Achse 31 mit einer unterschiedlich starken Gasschicht. Die Anordnung des Rohrabschnitts 36 ist in der Figur beispielhaft zu verstehen. Seine seitliche Ausdehnung in Richtung Trommel kann an der Stirnwand enden und auch die Beabstandung der Achse 37 von der Achse 31 kann so gewählt sein, daß beispielsweise kein Spalt mehr im unteren Teil der Trommelöffnung 38 ausgebildet ist und der Ringspalt 35 unterbrochen ist. Liegt in einer derartigen Ausbildung der Rohrabschnitt auf einer Fläche 41 der Stirnwand auf, so kann sich ein gasführender Spalt ausbilden, wie er in der Fig. 3a gezeigt ist. Im unteren Bereich wird dem Innenraum der Trommel dann kein gerichteter Gasstrom zugeführt.

Fig. 3a zeigt einen sichelförmig ausgebildeten Spalt, durch den der Trommel das Gas zuströmt. In dem Spalt 42 wird die Gasströmung gerichtet und in einer Anstellung in den Trommelinnenraum geblasen, die gewährleistet, daß bei einem gleichzeitig stattfindenden Sprühvorgang der Sprühstrahl nicht negativ von der Gasströmung beeinflußt wird.

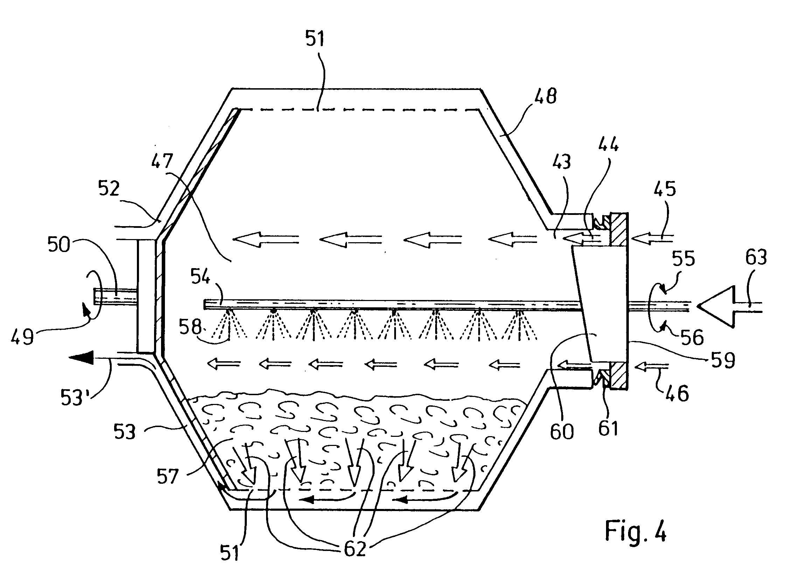

Fig. 4 zeigt stark schematisiert den Aufbau und die Wirkungsweise der erfindungsgemäßen Vorrichtung im Längsschnitt. An der Trommelöffnung 43 ist ein exzentrischer Ringspalt 44 ausgebildet, über den Gas in Pfeilrichtung 45 und 46 in einen Innenraum 47 der Trommel 48 einströmt. Die Trommel 48 dreht sich dabei in Pfeilrichtung 49 um die Achse 50. Am Trommelumfang sind partiell perforierte Segmente 51 vorgesehen, über die der durch den exzentrischen Ringspalt einströmende Gasstrom aus der Trommel 48 abgeführt werden kann. Unterhalb der perforierten Segmente 51 sind Gasabführungskanäle 52, 53 vorgesehen, über die das Gas aus der Trommel 48 abgesaugt wird. Die Gasabführungskanäle 52, 53 sind an der Trommel gasdicht ausgebildet und rotieren mit um die Achse 50. Das Gas wird in Pfeilrichtung 53' abgeführt. Nur wenn sich das perforierte Segment 51 im Bodenbereich befindet, wird Gas über das Segment 51 aus dem Innenraum 47 abgesaugt.

In der Figur ist auch ein Sprühdüsenträger 54 gezeigt, der Teil einer Sprühdüsenvorrichtung ist. Der Sprühdüsenträger 54 ist in einem Bereich von ca. 30° verstellbar, so daß der Sprühdüsenträger 54 in Pfeilrichtungen 55, 56 auf die Lage eines Gutbetts 57 in der Trommel 48 ausgerichtet werden kann. Ein Sprühstrahl von Düsen 58 wird derart auf das Gutbett 57 gerichtet, daß der Sprühstrahl das Gutbett 57 bestmöglich erfassen kann.

Wird bei rotierender Trommel 48 und einströmendem Gas immer mehr Gas aus der Trommel 48 abgezogen als ihr zugeführt wird, so entsteht im Trommelinnenraum ein Unterdruck. Dazu ist die gegenüber der Trommel 48 ortsfest angeordnete Beschickungsöffnung 59 mit einem den exzentrischen Ringspalt 44 bildenden Rohrabschnitt 60 gegenüber der Stirnwand der Trommelöffnung 53 mittels eines Dichtrings 61 abgedichtet.

Aufgrund des exzentrischen Ringspalts 44 wird das in den Innenraum der Trommel 48 einströmende Gas als gerichtete Strömung in die Tiefe der Trommel 48 strömen. Das Gas legt sich im Trommelinneraum mantelförmig um den Sprühdüsenträger 54. Das Gas wird aus der Trommel über die Segmente 51 im Bodenbereich der Trommel 48 abgesaugt, d.h. das Gas wird in einer Zwangsströmung, in der Figur mit Pfeil 62 eingezeichnet, durch das Gutbett 57 geführt. Die von den Düsen 58 versprühte Flüssigkeit, die dem Sprühdüsenträger 54 aus Pfeilrichtung 63 zuströmt, wird in derselben Richtung versprüht, wie das Gas aus der Trommel 48 abgezogen wird. Man bezeichnet deshalb dieses Verfahren als Gleichstromverfahren. Die Versprühung der Flüssigkeit ist dem Gasfluß in der Trommel gleichgerichtet.

Fig. 5 zeigt stark schematisiert die Gasführung in der Stirnwand 3 der Vorrichtung. Über gasdicht aneinanderkoppelbare Stutzen 68 des Gehäuseteils und 69 der Stirnwand sind die Gasführungskanäle des Gehäuseteils und der Stirnwand miteinander verbindbar. In der Stirnwand wird das Gas in Pfeilrichtung 70 und 71 geführt. Das Gas strömt radial in einen Ringraum 72 geführt ein, der zu einer Stirnwand 73 der Trommelöffnung versetzt ist. Die Stirnwand 73 ist in der Figur mit unterbrochenen Linien eingezeichnet. Durch die Anordnung des Ringraumes 72 zur Stirnwand 73 der Trommelöffnung entsteht ein Ringspalt 74, dessen Spaltweite im oberen Bereich größer ist als im unteren. Über den Ringspalt 74 in den Innenraum der Trommel einströmendes Gas wird deshalb bevorzugt in den oberen Bereich der Trommel strömen. In der Figur sind mit 75 und 76 noch Führungsrollen des Trommelöffnungsflansches eingezeichnet.

Die im Randbereich der Stinwand angeordneten Stutzen 69 sind über einen Druckausgleichskanal 77 miteinander verbunden. Über die Stutzen 68 des Gehäusteils in die Stutzen 69 der Stirnwand einströmendes Gas kann sowohl in Pfeilrichtung 70 wie auch in Pfeilrichtung 71 strömen.

## Patentansprüche

1. Vorrichtung mit einer um eine Achse rotierenden Trommel (23; 48) für Überzugsgut, insbesondere für die Filmlackierung und/oder Zuckerdragierung, deren Innenraum (47) einem Fluidstrom aussetzbar ist, wobei dem Innenraum ein Element zur Führung eines Gasstromes zugeordnet ist, das den Gasstrom als gerichtete mantelförmige Strömung durch die Ebene der Trommelöffnung und zumindest mit einer Längskomponente in Richtung der Achse durch den Innenraum der Trommel leitet und wobei das Element aus aus zwei ineinander angeordneten und zwischen sich einen ringförmigen Spalt (35, 42, 44) begrenzenden zylindrischen Rohrabschnitten (36, 60; 41) ausgebildet ist, dadurch gekennzeichnet, daß die Trommel (23; 48) partiell perforiert ist, daß das Element in oder unmittelbar an der Trommelöffnung (43) angeordnet ist und daß die Achsen der zylindrischen Rohrabschnitte (36, 60; 41) zueinander versetzt sind.

2. Vorrichtung nach Anspruch 1, dadurch gekennzeichnet, daß das Element mit Gaszuführungskanälen verbindbar ist, die radial von außen in den ringförmigen Spalt des Elements münden.

3. Vorrichtung nach Anspruch 1, dadurch gekennzeichnet, daß der Fluidstrom in einer während des Behandlungsprozesses verstellbaren Sprühvorrichtung (6) strömt.

4. Vorrichtung nach Anspruch 3, dadurch gekennzeichnet, daß die Sprühvorrichtung (6) einen Sprühdüsenträger (10; 54) aufweist, der drehbar gelagert ist.

5. Vorrichtung nach Anspruch 3 oder 4, dadurch gekennzeichnet, daß der Abstand der Sprühvorrichtung (6) zur freien Oberfläche eines Überzugsgutes in der Trommel (23; 48) verstellbar ist.

6. Vorrichtung nach einem der Ansprüche 3 bis 5, dadurch gekennzeichnet, daß die Sprühvorrichtung (6) in Achsrichtung der Trommel (23; 48) verschiebbar ist.

7. Vorrichtung nach Anspruch 4, dadurch gekennzeichnet, daß der Sprühdüsenträger (10; 54) als im Querschnitt kreisförmiges Rohr an einem Ende auf einem ersten Tragarmabschnitt (9) drehbar befestigt ist und ein zweiter Tragarmabschnitt (11) der Sprühvorrichtung (6) an einem Gehäuseteil (2) verschieb- und/oder verschwenkbar befestigt ist.

8. Vorrichtung nach einem der Ansprüche 1 bis 7, dadurch gekennzeichnet, daß das Element zur Führung des Gasestromes nach der Lage eines Gutbetts (57) ausrichtbar ist.

## Claims

1. Apparatus for coated products with a drum (23; 48) which rotates about an axis, in particular for film-coating and/or sugar-coating, whose inner region (47) is subjected to a stream of fluid, whereby an element for guiding a gas stream is allocated to the inner region which guides the gas stream to a directed encasing stream through the plane of the drum opening and, with at least one longitudinal component in the direction of the axis, through the inner region of the drum, and whereby the element comprises two cylindrical pipe sections (36, 60; 41) which are arranged within another and between which a defining ring-shaped gap (35, 42, 44) is formed, characterized in that the drum (23; 48) is partially perforated, that the element is arranged in or directly on the drum opening (43), and that the axes of the cylindrical pipe sections (36, 60; 41) are displaced relative to each other.

2. Apparatus according to claim 1, characterized in that the element can be connected to gas guiding channels which lead radially outwards into the ring-shaped gap of the element.

3. Apparatus according to claim 1, characterized in that the fluid stream streams in a spraying device (6) which is adjustable during the treatment process.

4. Apparatus according to claim 3, characterized in that the spraying device (6) exhibits a spray nozzle support (10; 54) which is mounted in a rotatable fashion.

5. Apparatus according to claim 3 or 4, characterized in that the separation of the spraying device (6) from the free surface of a coated product in the drum (23; 48) is adjustable.

6. Apparatus according to one of the claims 3 through 5, characterized in that the spraying device (6) is displaceable in the axial direction of the drum (23; 48).

7. Apparatus according to claim 4, characterized in that the spray nozzle support (10, 54) is a pipe with circular-shaped cross section and is attached in a rotatable fashion at one end to a first support-arm section (9), and a second support-arm section (11) of the spraying device (6) is attached to a portion of the housing (2) in a displaceable and/or pivotable fashion.

8. Apparatus according to one of the claims 1 through 7, characterized in that the element for guiding the gas stream is adjustable in dependence on the position of a product-bed (57).

## Revendications

1. Dispositif comprenant un tambour (23; 48) tournant autour d'un axe, qui est prévu pour une matière de revêtement, en particulier pour l'enduction d'une pellicule et/ou l'enrobage de sucre, et dont le volume interne (47) peut être exposé à un courant de fluide, un élément de guidage d'un courant gazeux, qui conduit le courant gazeux comme un écoulement dirigé en forme d'enveloppe à travers le plan de l'ouverture du tambour et au moins avec une composante longitudinale suivant la direction de l'axe à travers le volume intérieur du tambour, étant adjoint au volume interne, l'élément étant constitué de deux tronçons tubulaires cylindriques (36, 60; 41) qui sont agencés l'un dans l'autre et qui délimitent entre eux une fente annulaire (35, 42, 44), caractérisé en ce que le tambour (23; 48) est partiellement perforé, en ce que l'élément est agencé dans ou immédiatement sur l'ouverture de tambour (43) et en ce que les axes des tronçons tubulaires cylindriques (36, 60; 41) sont mutuellement décalés.

2. Dispositif suivant la revendication 1, caractérisé en ce que l'élément peut être relié à des canaux d'amenée de gaz qui débouchent radialement depuis l'extérieur dans la fente annulaire de l'élément.

3. Dispositif suivant la revendication 1, caractérisé en ce que le courant de fluide s'écoule dans un dispositif de pulvérisation (6) réglable pendant le processus de traitement.

4. Dispositif suivant la revendication 3, caractérisé en ce que le dispositif de pulvérisation (6) présente un support d'ajutages de pulvérisation (10; 54) qui est supporté de manière à pouvoir tourner.

5. Dispositif suivant l'une des revendications 3 et 4, caractérisé en ce que la distance entre le dispositif de pulvérisation (6) et la surface libre d'une matière de revêtement dans le tambour (23; 48) est réglable.

6. Dispositif suivant l'une des revendications 3 à 5, caractérisé en ce que le dispositif de pulvérisation (6) peut être déplacé suivant une direction axiale du tambour (23; 48).

7. Dispositif suivant la revendication 4, caractérisé en ce que le support d'ajutages de pulvérisation (10; 54) est, sous la forme d'un tube à section transversale circulaire, fixé de manière à pouvoir tourner à une extrémité d'une première section de bras de support (9) et en ce qu'une deuxième section de bras de support (11) du dispositif de pulvérisation (6) est fixée de manière à pouvoir coulisser et/ou pivoter sur une partie de boîtier (2).

8. Dispositif suivant l'une des revendications 1 à 7, caractérisé en ce que l'élément de guidage du courant gazeux peut être orienté selon la position d'un lit de matière (57).
